# FASCICULE DE BREVET EUROPEEN

(11) **EP 2 352 946 B1**
(45) Date de publication et mention de la délivrance du brevet: **01.05.2013**
(21) Numéro de dépôt: 09797089.1
(22) Date de dépôt: 25.11.2009
(51) Int. Cl.: F16L 59/22, F16L 59/14

(54) **CONDUITE SOUS-MARINE DE JONCTION COUDÉE COMPRENANT UNE ISOLATION THERMIQUE**
UNTERWASSER-ANSCHLUSSBOGENROHR MIT WÄRMEISOLIERUNG
UNDERWATER JUNCTION ELBOW HAVING THERMAL INSULATION

(30) Priorité: 03.12.2008 FR 0858214
(43) Date de publication de la demande: 10.08.2011
(73) Titulaire: SAIPEM S.A., 78180 Montigny-le-Bretonneux (FR)
(72) Inventeur: TRIBOUT, Julien, F-75015 Paris (FR); VERDEIL, Julien, F-78110 Le Vésinet (FR)
(74) Mandataire: Domange, Maxime
(86) Numéro de dépôt international: PCT/FR2009/052298
(87) Numéro de publication internationale: WO 2010/063922

(56) Documents cités:
- WO-A1-2004/003424
- DE-A1- 3 345 371
- FR-A- 2 821 143
- FR-A- 2 826 051
- FR-A1- 2 841 632
- NL-A- 7 607 158

## Description

La présente invention concerne une conduite sous-marine de jonction comprenant une isolation périphérique, notamment une conduite sous-marine véhiculant des fluides chauds ou froids, de préférence une conduite sous-marine destinée aux grandes profondeurs.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes lesquelles peuvent dépasser 3000 m.

La présente invention concerne en particulier une conduite de jonction entre éléments de conduites sous-marines isolées, installées sur les champs pétroliers par très grandes profondeurs, notamment entre une conduite reposant sur le fond de la mer et une conduite de liaison fond-surface en suspension entre le fond de la mer et un navire de surface ancré sur ledit champ pétrolier.

Le pétrole brut sort en général de têtes de puits à des températures de 45 à 75°C, voire plus, et lesdites têtes de puits sont souvent éloignées horizontalement de plusieurs kilomètres du support de surface qui reçoit et traite le pétrole brut, tandis que l'eau est à environ de 3-5°C. De plus, la profondeur d'eau atteint et dépasse 2000 à 3000m, et l'on cherche à garder le pétrole brut jusqu'à son arrivée ne surface, à une température supérieure à 30-35°C, de manière à éviter la formation de bouchons de paraffine ou d'hydrates de gaz, qui bloqueraient la production. Ceci requiert donc une isolation thermique performante continue de la conduite de liaison fond-surface véhiculant le pétrole brut.

Ainsi, on a développé de multiples types de conduites isolées et en particulier des conduites de type "Pipe In Pipe" ou PiP, c'est à dire "conduite dans une conduite", dans laquelle une conduite interne véhicule le fluide et une conduite externe coaxiale à la précédente, appelée aussi "enveloppe externe", est en contact avec le milieu ambiant, c'est-à-dire l'eau. L'espace annulaire entre les deux conduites peut être rempli d'un matériau isolant ou encore être vidé de tout gaz.

Ces systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doit résister la conduite est alors d'environ 10 MPa, soit environ 100 bars pour 1000m de profondeur et d'environ 30 MPa, soit environ 300 bars pour 3000m.

Ces conduites à hautes performances sont utilisées en longueur courante, tant pour les conduites reposant sur le fond de la mer que pour les conduites de liaison fond-surface, mais en général ne peuvent par être utilisées pour les éléments singuliers de jonction, appelés « spool piece », ou pièce de raccordement, ou encore conduite de jonction, car ces éléments de conduites présentent en général des formes compliquées, comprenant une pluralité de courbures ou coudes et doivent être fabriquées après la pose des conduites sous-marines et l'installation des liaisons fond-surface.

On connaît des moyens d'isolation des conduites externes résistant à des pressions hydrostatiques élevées et donc aptes à être utilisées à des profondeurs d'immersion élevées, constituées par :
- des revêtements matériaux polymères massifs quasi incompressibles à base de polyuréthane, polyéthylène, polypropylène etc. qui se présentent le cas échéant sous forme de manchon tubulaire massif. Mais ces matériaux présentent une conductivité thermique et des propriétés d'isolation thermiques assez moyennes, insuffisantes pour éviter les inconvénients de formation de bouchons mentionnés ci-dessus en cas d'arrêt de production pour les conduites sous-marines véhiculant des hydrocarbures, ou
- Des revêtements en matériaux synthétiques constitués de billes creuses contenant un gaz et résistantes à la pression extérieure, noyées dans des liants tels que du béton, une résine époxy, notamment des revêtements connus sous le nom de mousse syntactique, etc... dont les propriétés d'isolation thermique sont supérieures, mais qui sont nettement plus coûteuses et plus difficiles à fabriquer et à installer. On a recours en effet à des demi-coquilles que l'on assemble autour de la soudure d'assemblage à protéger et après réalisation de celle-ci. Mais, il faut alors combler les interstices entre coquilles de manière à éviter les ponts thermiques localisés. Dans un autre mode de réalisation, on surmoule directement la conduite ou les portions de conduite pour obtenir une isolation sans discontinuité sur la périphérie, mais cette méthode présente l'inconvénient d'être sujette à fissuration en raison du fort gradient de température entre la conduite, en général à une température de 50 à 85°C, et le milieu ambiant marin en contact avec l'enveloppe externe, à une température de 3 à 5°C.

Par ailleurs, on connaît des matériaux isolants à propriété d'isolation thermique supérieure, c'est-à-dire à plus faible conductivité thermique, doublée de propriétés de changement de phases. Des matériaux isolants à changement de phase (PCM) sont mis en oeuvre notamment dans WO 00/40886 et WO 2004/003424, mais ces matériaux isolants PCM qui peuvent adopter un état liquide requièrent un confinement dans un matériau absorbant, comme décrit dans WO 00/10886 ou un confinement dans des poches, comme décrit dans WO 2004/003424.

Ces revêtements isolants thermiques sont revêtus d'une enveloppe externe tubulaire continue semi-rigide. Mais dans la technique antérieure, les réalisations décrites sont limitées à la fabrication de conduites rectilignes et ne peuvent pas être adaptées pour fabriquer des conduites coudées. Ces réalisations ne sont pas adaptables pour la réalisation d'isolation thermique de conduites de jonction coudées de par la structure des enveloppes externes, qui telles que décrites ne peuvent pas être déformées de manière concentrique par rapport à la conduite interne et ne permettraient pas d'obtenir une épaisseur sensiblement constante de matériau isolant, notamment dans les zones coudées.

D'autres matériaux isolants sous forme de gel ont été décrits, notamment dans les brevets FR 2 800 915, FR 2 820 426 et FR 2 820 752. Plus particulièrement, ces gels isolants sont constitués d'un complexe comprenant un premier composé présentant des propriétés d'isolation thermique que l'on mélange avec un second composé consistant en un composé gélifiant ou à effet structurant, notamment par réticulation tel, qu'un composé de polyuréthane, ledit premier composé se présentant sous forme de particules ou microcapsules dispersées au sein d'une matrice dudit second composé gélifié ou réticulé, ladite matrice confinant ainsi ledit premier composé isolant pouvant se présenter sous forme liquide, réduisant radicalement de ce fait les phénomènes de convexion.

Ledit premier composé peut être lui- même un composé à changement de phase comme la paraffine, d'autres composés de la famille des alcanes, tels que les cires, les bitumes, les goudrons, les alcools gras, les glycols, et plus particulièrement encore tout composé dont la température de fusion est comprise entre la température t₂ des effluents chauds circulant la conduite interne et température t₃ du milieu environnant de la conduite en opération, soit en fait, en général une température de fusion comprise entre 20 et 80°C.

Mais ledit premier composé peut être un matériau isolant sans changement de phase tel que du kérosène.

Dans les réalisations antérieures, ces gels isolants sont confinés entre une conduite interne en acier et une enveloppe de protection externe souple ou semi-rigide, mais ce uniquement pour des portions de conduite rectiligne.

Pour ce faire, on prépare des enveloppes tubulaires préconstituées que l'on dispose par enfilement l'une sur l'autre de manière coaxiale, et on injecte le gel dans l'espace annulaire après avoir obstrué les extrémités desdites enveloppes tubulaires.

Cette méthode n'est pas applicable à des parties de conduites coudées, car on ne peut pas cintrer l'enveloppe externe souple au rayon de courbure requis sans créer des pliages affectant le caractère circulaire et concentrique de la section transversale de l'enveloppe externe par rapport à celle de la conduite interne. Il en résulterait des réductions d'épaisseur de l'espace annulaire interne entre la conduite interne et l'enveloppe externe et donc des diminutions localisées de l'isolation thermique au niveau dudit espace annulaire.

Le but de la présente invention est donc de fournir des conduites de jonction coudées isolées thermiquement améliorées, qui soient aisées à fabriquer et présentant des propriétés d'isolation thermique élevées.

Pour ce faire la présente invention fournit une conduite de jonction sous-marine isolée thermiquement assurant la jonction entre deux portions de conduites sous-marines isolées thermiquement, ladite conduite de jonction comportant une conduite interne coudée rigide, de préférence en acier et présentant un rayon de courbure de 3 à 10 fois son diamètre externe, de préférence 4 à 5 fois son diamètre externe, revêtue d'un matériau isolant thermique, comprenant :
- une enveloppe externe entourant ladite conduite interne, en matériau souple ou semi-rigide suivant la forme coudée de ladite conduite interne, de manière concentrique,
- la paroi tubulaire de ladite enveloppe externe comportant des éléments structurels de renfort de forme annulaire ou hélicoïdale (5₁a-5₂a) aptes à permettre la courbure de ladite paroi tubulaire de l'enveloppe externe tout en maintenant sa section transversale sensiblement uniforme, de préférence sensiblement circulaire, et concentrique à la section transversale de ladite conduite interne, en dépit de sa courbure pour suivre le contour coudé de ladite conduite interne selon son dit rayon de courbure.

Selon la présente invention, ladite conduite de jonction coudée comprend en outre :
- une pluralité d'éléments de support dénommés éléments centraliseurs en matériaux rigide plastique ou composite intercalés entre ladite conduite interne et ladite enveloppe externe de façon à maintenir les sections transversales desdites enveloppe externe et conduite interne sensiblement concentriques, lesdits éléments centraliseurs étant espacés dans la direction axiale de ladite conduite tous les au moins 1m, de préférence tous les 3 à 10m, et
- une pluralité d'éléments de guidage longitudinaux constitués en matériau rigide ou semi-rigide, disposés à distance sensiblement constante, de préférence constante, de la surface de la conduite interne coudée, s'étendant entre deux éléments centraliseurs successifs sur la périphérie desquels les extrémités desdits éléments de guidage longitudinaux reposent, de préférence au moins quatre dits éléments de guidage régulièrement répartis sur la périphérie desdits éléments centraliseurs, et
- un matériau isolant thermique quasi-incompressible, de préférence sous forme de gel, remplissant entièrement l'espace annulaire entre ladite conduite interne et ladite enveloppe externe.

On entend ici par « conduite coudée », que ladite conduite comporte au moins un tronçon présentant une courbure à rayon de courbure donné pour former au moins un coude, de préférence entre deux tronçons rectilignes disposés de préférence encore à 90°, mais pouvant être disposés selon un autre angle en général entre 45 et 120°.

On entend ici par rayon de courbure, le rayon de courbure de la conduite interne au niveau de la fibre neutre, c'est-à-dire à l'axe de ladite conduite interne.

On comprend que lesdits éléments structurels de forme annulaire ou hélicoïdale constituent des éléments structurels de renfort en ce qu'ils assurent le maintien de la forme de la section transversale de la paroi tubulaire de l'enveloppe externe lorsque celle-ci est enfilée autour de la conduite interne depuis l'une de ses extrémités pour suivre la rayon de courbure de la conduite interne de manière concentrique à celle-ci.

On comprend donc que la courbure de l'enveloppe externe présente le même centre de courbure et le même rayon de courbure que celui de la conduite interne au niveau d'un coude donné, et donc que le rayon de courbure de l'enveloppe externe est égal à 3 à 10 fois le diamètre externe de la conduite interne et de préférence respectivement 4 à 5 fois son diamètre externe.

On comprend que lesdits éléments de guidage longitudinaux suivent la courbure de la surface de la conduite interne coudée et du fait qu'ils sont constitués en matériau rigide ou semi-rigide sont aptes à supporter ladite enveloppe externe souple sans se déformer sensiblement, c'est-à-dire sans se déformer au-delà de quelques millimètres.

On comprend également que lesdits éléments de guidage permettent que l'enveloppe externe souple garde une section transversale sensiblement uniforme en dépit de sa souplesse, de préférence sensiblement circulaire entre deux éléments centraliseurs, mais en outre desdits éléments de guidage permettent de faciliter la progression de l'enveloppe souple lorsqu'on l'enfile autour de la conduite interne sans que la progression de l'enfilage ne soit empêchée par lesdits éléments centraliseurs, notamment dans les parties coudées.

Lesdits éléments de guidage longitudinaux peuvent être constitués de profilés en matière plastique composite ou également en acier, notamment des profilés en fer plat, reposant à plat sur la surface externe des colliers centraliseurs sur lesquels ils peuvent être vissés. Dans la mesure où les éléments de guidage sont uniquement en contact avec l'enveloppe externe et non avec la conduite interne, ils ne sont pas nécessairement réalisés en matériau isolant thermique. Ils peuvent être rigides ou semi-rigides de manière à pouvoir supporter sans se déformer ladite enveloppe externe.

Selon la présente invention, il est possible de mettre en oeuvre une enveloppe externe relativement souple, du fait d'une part de la mise en oeuvre des dits éléments de guidage longitudinaux autour de la conduite interne coudée et d'autre part, du fait que le matériau isolant thermique mis en oeuvre est un matériau quasi incompressible sous forme de gel.

Du fait de la mise en oeuvre de ces éléments de guidage longitudinaux, il est possible de mettre en oeuvre des enveloppes externes d'une grande souplesse, ce qui est avantageux pour faciliter sa mise en place autour de conduites internes en acier coudé, quelque soit le degré de courbure d'une part.

D'autre part, ces éléments de guidage contribuent à maintenir une section transversale sensiblement uniforme de l'enveloppe externe en dépit de sa courbure pour suivre le contour coudé de la conduite interne et ainsi permettre d'obtenir une couche de matériau isolant remplissant l'espace annulaire entre la conduite interne et l'enveloppe externe d'une épaisseur sensiblement constante et donc des propriétés d'isolation contrôlées et sensiblement constantes sur toute la longueur de la conduite coudée.

Enfin, la mise en oeuvre d'une enveloppe souple confère une protection mécanique suffisante dans le cas de la mise en oeuvre de matériau isolant sous forme de gel isolant quasi incompressible.

C'est donc la combinaison de la mise en oeuvre des éléments longitudinaux de guidage d'une part, et d'un matériau isolant sous forme de gel isolant incompressible qui rend possible la mise en oeuvre d'une enveloppe externe souple, de mise en place aisée conformément à la présente invention.

Du fait du caractère quasi incompressible du gel isolant, la mise en oeuvre d'une enveloppe souple est suffisante pour lui apporter une protection mécanique.

Enfin, la mise en oeuvre de ce type de gel isolant à titre de matériau isolant est avantageuse en ce qu'il est obtenu à partir de réactifs qui peuvent être injectés sous forme liquide pour ensuite se durcir par réticulation,sous forme de gel in situ.

La mise en oeuvre des dits éléments de guidage d'une part, et d'autre part d'une dite enveloppe souple rendent la fabrication d'une conduite coudée selon l'invention relativement aisée.

Dans une première variante de réalisation, ladite enveloppe externe présente une paroi tubulaire pleine extrudée et lesdits éléments structurels de renfort sont des éléments de forme annulaire constitués par des rainures, ondulations ou cannelures en creux régulièrement espacés dans la direction axiale longitudinale de ladite paroi tubulaire à section transversale circulaire.

Plus particulièrement, lesdits éléments structurels de renfort de la paroi tubulaire pleine de l'enveloppe externe souple ou semi-rigide sont constitués par des cannelures en creux de 1 à 2cm de profondeur et de largeur, régulièrement espacées d'une longueur d'au moins 5cm, de préférence de 5 à 10cm, ladite paroi tubulaire pleine présentant une épaisseur de 1 à 5mm d'épaisseur et étant constituée d'un matériau plastique, de préférence du polypropylène.

Dans une deuxième variante de réalisation, ladite paroi tubulaire est constituée par un enroulement spiralé d'une bande ou ruban en matière plastique ou textile souple enduite d'un polymère, de préférence du polyuréthane comprenant un dit élément structurel de renfort de forme hélicoïdale constitué par un fil ou jonc en fer ou matériau plastique semi-rigide, de préférence de un fil ou jonc de diamètre de 1 à 8mm, collé ou thermo-soudé sur la surface externe du ruban ou de préférence enrobé dans la masse du matériau constitutif dudit ruban et formant ainsi une protubérance à la surface externe dudit ruban.

Les enveloppes externes constituées de paroi tubulaire pleine cannelée ou lesdits rubans comprenant des éléments longitudinaux sur sa surface ou dans sa masse sont connus de l'homme de l'art, notamment pour constituer des gaines dans le domaine du bâtiment ou des travaux publics, notamment des gaines de confinement de câbles électriques ou des gaines de ventilation.

On préfère ce second mode de réalisation avec un ruban enroulé en spirale, car il permet de fabriquer plus facilement une enveloppe externe au diamètre voulu sur place, à partir d'un stock de bandes.

La mise en oeuvre d'une enveloppe externe ainsi configurée concentrique à ladite conduite interne d'une part, et d'autre part d'un matériau isolant sous forme de gel, contribue à conférer une couche de matériau isolant d'épaisseur sensiblement constante et donc ayant des propriétés d'isolation contrôlées et sensiblement constantes sur toute la périphérie et toute la longueur de la conduite. Du fait du caractère quasi-incompressible du gel isolant, une enveloppe souple ou semi-rigide est suffisante pour conférer une protection mécanique du matériau isolant. En outre, ces gels isolants sont avantageux en ce qu'ils sont obtenus à partir de réactions physiques et chimiques, entre différents composants, et peuvent être injectés sous forme liquide après mélange des différents composants, entre les conduites interne et enveloppe externe de la conduite de jonction, pour ensuite se durcir par réticulation sous forme de gel in situ.

Du fait que le matériau isolant est quasi-incompressible sous forme de gel, c'est-à-dire entre autres, qu'il ne contient pas de gaz libre, le matériau souple ou semi-rigide de l'enveloppe externe, soumis à la pression hydrostatique à grande profondeur, est supporté par le gel, de sorte que ledit matériau souple ou semi-rigide de la paroi tubulaire de l'enveloppe externe ne requiert pas une résistance mécanique intrinsèque aussi élevée que celle d'une conduite en acier.

On entend ici par « enveloppe en matériau semi-rigide », un matériau suffisamment rigide pour se maintenir en forme en dépit du poids propre du matériau isolant confiné dans l'enveloppe, mais surtout présentant une certaine soupiesse pour accepter des déformations lors de sa mise en place autour de la conduite interne et le cas échéant pour suivre des déformations résultant du changement de volume du matériau isolant lors de son éventuel changement de phase, lorsque celui-ci est un matériau à changement de phase.

Par « paroi tubulaire », on entend que lesdites enveloppes externe et interne peuvent présenter une section dans la direction transversale perpendiculaire à l'axe longitudinal XX' de ladite enveloppe de forme circulaire, ovale ou encore polygonale, mais de préférence circulaire.

Les formes ovales ou polygonales sont plus particulièrement appropriées dans le cas où le matériau isolant quasi incompressible est un matériau à changement de phase, de sorte que les parois peuvent ainsi se déformer plus facilement pour supporter l'augmentation de volume lors du changement de phase du matériau isolant le cas échéant, en se rapprochant d'une forme circulaire.

Plus particulièrement, la conduite de jonction sous-marine selon l'invention est constituée à partir de :
- une conduite interne en acier d'épaisseur de 8 à 35 mm et de diamètre externe de 100 à 600 mm et,
- une enveloppe externe d'épaisseur de 1 à 8mm et un diamètre interne de 120 à 1000 mm, avec
- un matériau isolant d'épaisseur de 10 à 200 mm.

Plus particulièrement, la conduite de jonction comprend des éléments centraliseurs étanches comprenant de préférence des orifices obturables permettant le remplissage en fluide de matériau isolant de l'espace entre deux éléments centraliseurs étanches successifs, avec au moins un élément centraliseur étanche à chaque extrémité, de préférence au moins un élément centraliseur étanche tous les au moins 1m, de préférence encore tous les 3 à 10m et des éléments centraliseurs non étanches comportant des évidements autorisant la circulation de fluide de matériau isolant à travers lesdits évidements desdits éléments centraliseurs non étanches, lors du remplissage entre deux éléments centraliseurs étanches consécutifs.

On entend ici par « élément centraliseur étanche » que lorsque ladite enveloppe externe est appliquée contre lesdits éléments centraliseurs étanches fixée sur ceux-ci à l'aide notamment de moyens de cerclage externes, lesdits éléments centraliseurs ne permettent pas la circulation de fluide à travers un dit élément centraliseur étanche et donc au-delà d'un compartiment situé entre deux éléments centraliseurs étanches successifs. Ceci permet d'effectuer le remplissage en dit matériau isolant sous forme liquide que l'on confine entre deux éléments centraliseurs étanches consécutifs avant sa gélification par réticulation. Ainsi, le remplissage intégral du volume entre deux centraliseurs étanches peut être effectué avant que la gélification en masse du matériau isolant ne commence de manière significative.

Plus particulièrement, lesdits éléments centraliseurs sont constitués par des colliers en matériau rigide disposés autour et contre ladite conduite interne et sur lesquels repose ladite enveloppe externe.

On comprend que ces éléments centraliseurs contribuent également à conférer une résistance mécanique à l'enveloppe externe, notamment lorsque la conduite de jonction coudée repose sur le fond de la mer et maintenir une épaisseur sensiblement constante du matériau isolant confiné entre lesdites conduite interne et enveloppe externe. En outre, la constitution en matériau plastique ou composite confère aux éléments centraliseurs une isolation thermique sensiblement comparable à celle du matériau isolant thermique rempli dans le volume délimité par deux éléments centraliseurs successifs et lesdites conduite interne et enveloppe externe, ceci afin d'éviter les ponts thermiques entre la conduite interne et l'enveloppe externe.

De préférence, le gel isolant comprend un premier composé présentant des propriétés d'isolation thermique, tels que des alcanes, comprenant une chaîne hydrocarbonée d'au moins six atomes de carbone, de préférence au moins dix atomes de carbone, en mélange avec un second composé consistant en un composé polymère gélifiant ou à effet structurant, notamment par réticulation tel, qu'un composé de type polyuréthane, polypropylène, polyéthylène ou silicone, ledit premier composé se présentant de préférence sous forme de particules ou microcapsules dispersées au sein d'une matrice dudit second composé gélifié ou réticulé, ladite matrice confinant ainsi ledit premier composé isolant.

Ces gels isolants présentent l'intérêt de pouvoir être mis en oeuvre à l'état liquide et se transformer après quelques heures en gel, dans lequel le composé isolant se trouve microencapsulé dans une matrice du deuxième composé jouant en quelque sorte le rôle d'éponge apte à confiner le matériau isolant et le maintenir dans une forme d'épaisseur sensiblement constante, réduisant ainsi radicalement les phénomènes de convexion, et le cas échéant absorber les variations de volume si le matériau isolant est un matériau à changement de phase.

Plus particulièrement, ledit premier composé présentant des propriétés d'isolation thermique peut être un matériau isolant à changement de phase, notamment des alcanes ou alcools présentant une chaîne hydrocarbonée d'au moins quatorze atomes de carbone, tels que les paraffines, cires, bitume, goudron, alcools gras ou encore glycols. Dans ce cas, le deuxième composé gélifiant peut absorber une part importante des variations de volume du premier composé lors des changements de phases.

Ces matériaux isolants à changement de phase sont avantageux, car ils se comportent comme des accumulateurs de chaleur capables de restituer leur énergie dans leur phase de solidification et inversement capables d'absorber cette énergie en cours de fusion. Lorsqu'ils restituent l'énergie accumulée, ces matériaux permettent donc d'augmenter la durée des arrêts de production sans risque de colmatage de conduite par refroidissement prématuré de leur contenu.

Le matériau à changement de phase présente avantageusement une température de fusion liquide/solide t₀ comprise entre 20 et 80°C, supérieure à la température t₁ à partir de laquelle le fluide circulant à l'intérieur de la conduite présente une augmentation de viscosité dommageable pour sa circulation dans la conduite et inférieure à la température t₂ du fluide en circulation dans la conduite en opération.

Dans un mode de réalisation particulier, ledit gel isolant est un mélange de kérosène et polyuréthane.

Le kérosène est constitué majoritairement d'un alcane présentant une chaîne carbonée d'au moins dix atomes de carbone et ne présentant pas de propriétés de changement de phase.

Des gels isolants de ce type présentent les caractéristiques physicochimiques suivantes :
- ils sont constitués d'un composé isolant, à changement de phase, ou non, dispersé au sein d'une matrice réticulée formant éponge à cellules creuses microscopiques et étanches,
- la réticulation de la matrice est soit de type physique, soit de type chimique, soit encore de type physico-chimique, ladite réticulation se produisant après plusieurs heures, soit à température ordinaire (10-25°C), soit par chauffage de l'ensemble,
- les gels ainsi obtenu ont une dureté shore A20 à A80 selon le type de matrice,
- leur conductivité thermique varie de 0.130 à 0.150 W/m X K.

Afin de permettre sa liaison auxdites portions de conduite sous-marine isolée thermiquement dont elle assure la jonction, ladite conduite de jonction selon l'invention comprend avantageusement un élément de raccordement, de préférence une partie mâle ou femelle d'un connecteur automatique à chaque extrémité.

Dans un mode préféré de réalisation, une conduite de jonction selon l'invention comporte au moins deux tronçons coudés, espacés par au moins un tronçon rectiligne de conduite, de préférence au moins 3 tronçons coudés et au moins deux tronçons rectilignes entre lesdits tronçons coudés.

Comme explicité ci-après, ce mode de réalisation d'une pluralité de coudes confère à la conduite de jonction une flexibilité autorisant des mouvements relatifs éventuels d'extrémités des conduites dont elle assure la jonction, liés à la dilatation desdites conduites de par le flux de chaud qu'elle véhicule et également des mouvements desdites conduites dus à l'effet de fond lorsque les conduites reposant sur le fond de la mer sont soumises à des variations de pression.

Dans un mode de réalisation particulier, une conduite de jonction selon l'invention comporte au moins un tronçon rectiligne d'enveloppe externe en matière plastique rigide (5₃).

La présente invention fournit également un procédé de fabrication, dans lequel on réalise les étapes suivantes dans lesquelles :
1) on applique de préférence des éléments centraliseurs, de préférence régulièrement espacés, à la surface d'une dite conduite interne coudée avec au moins deux dits éléments centraliseurs étanches respectivement à chaque extrémité et de préférence des éléments centraliseurs non étanches entre les éléments centraliseurs étanches d'extrémité, et
2) on applique de préférence desdits éléments de guidage longitudinaux s'étendant par-dessus et entre lesdits éléments centraliseurs successifs sur lesquels ils reposent et sont le cas échéant fixés,
3) on enfile une dite enveloppe externe souple ou semi-rigide autour de ladite conduite interne, les extrémités de ladite enveloppe externe étant de préférence cerclées autour et contre lesdits éléments centraliseurs d'extrémité au moins,
4) on remplit entièrement l'espace libre entre lesdites conduite interne et enveloppe externe avec un dit matériau isolant thermiquement, versé à l'état liquide, de préférence par des orifices obturables au niveau de dits éléments centraliseurs étanches.

Dans le procédé selon l'invention, on fabrique une dite conduite de jonction comportant une pluralité de tronçons coudés et une pluralité de tronçons rectilignes, caractérisé en ce qu'on réalise des étapes dans lesquelles :
1) on réalise deux parties de dite conduite interne comprenant chacune au moins un tronçon coudé, de préférence au moins deux tronçons coudés, et au moins un tronçon rectiligne de préférence au moins deux tronçons rectilignes,
2) on applique desdits éléments centraliseurs sur lesdites parties de conduite interne et desdits éléments de guidage sur lesdits éléments centraliseurs, avec de préférence des éléments centraliseurs étanches délimitant les extrémités de chacun des tronçons coudés et rectilignes,
3) on enfile des tronçons de dite enveloppe externe souple ou semi-rigide autour desdits tronçons coudés ou rectilignes desdites parties de conduite interne par-dessus desdits éléments centraliseurs et lesdits éléments de guidage, et
4) on solidarise lesdits tronçons d'enveloppe externe, de préférence au niveau desdits éléments centraliseurs étanches aux extrémités de chacun desdits tronçons rectilignes et coudés de conduite interne, excepté de préférence à une extrémité du tronçon à l'extrémité d'au moins une des dites parties de conduite de jonction ainsi constituées, pour permettre le repliement de ladite extrémité d'enveloppe externe au niveau de la zone de soudage de l'étape 5),
5) on réalise un assemblage par soudage bout à bout des deux extrémités des deux dites parties de conduite interne,
6) on réalise la jonction des extrémités des deux tronçons terminaux de dites enveloppes externes souples ou semi-rigides en vis-à-vis de la zone de soudage de l'étape 5), et
7) on réalise le remplissage en matériau isolant thermique des espaces libres entre lesdits tronçons d'enveloppe externe et lesdits tronçons de conduite interne, versé sous forme liquide, de préférence au niveau d'orifices obturables dans desdits éléments centraliseurs étanches aux extrémités desdits tronçons.

D'autres caractéristiques et avantages de la présente invention apparaîtront à la lumière de la description détaillée qui va suivre, en référence aux figures suivantes dans lesquelles :
- la figure 1 représente en coupe et en vue de côté une conduite de jonction isolée selon l'invention installée entre une embase d'ancrage d'une conduite de liaison fond-surface et une conduite isolée reposant sur le fond de la mer,
- la figure 2 est une vue en perspective d'une conduite de jonction isolée selon l'invention, en référence à la figure 1,
- la figure 3 est une vue de côté d'une enveloppe annelée semi-rigide en matériau plastique servant d'enveloppe externe à la conduite de jonction isolée selon l'invention,
- la figure 4 est une vue de côté d'une enveloppe souple en matériau plastique renforcée servant d'enveloppe externe à la conduite de jonction isolée selon l'invention,
- les figures 4A-4B sont des vues en coupe du processus de réalisation de l'enveloppe de la figure 4 à partir d'une bande de toile renforcée,
- la figure 5 est une vue de côté du cintrage de l'enveloppe externe de la figure 4 en position rectiligne pour obtenir une forme cintrée après enfilage autour d'une conduite interne présentant une courbure,
- les figures 6A-6B-6C-6D représentent en vue de côté, une portion de conduite la jonction au cours des différentes étapes de l'installation d'une enveloppe externe,
- les figures 7A-7B sont des sections respectivement selon les plans CC et DD de la figure 6A au niveau de centraliseurs respectivement étanches (figure 7A) et muni d'orifices de passage (figure 7B),
- la figure 8 est une vue de deux parties de conduite de jonction comportant chacune une pluralité de tronçons coudés (3c) et tronçons rectilignes (3d),
- la figure 8A est une vue de dessus de la zone L1-L2 de la figure 8 montrant les éléments centraliseurs et éléments de guidage latéraux seulement,
- la figure 8B est une coupe selon le plan CC de la figure 8A,
- la figure 8C est une vue de dessus en référence à la figure 8B.

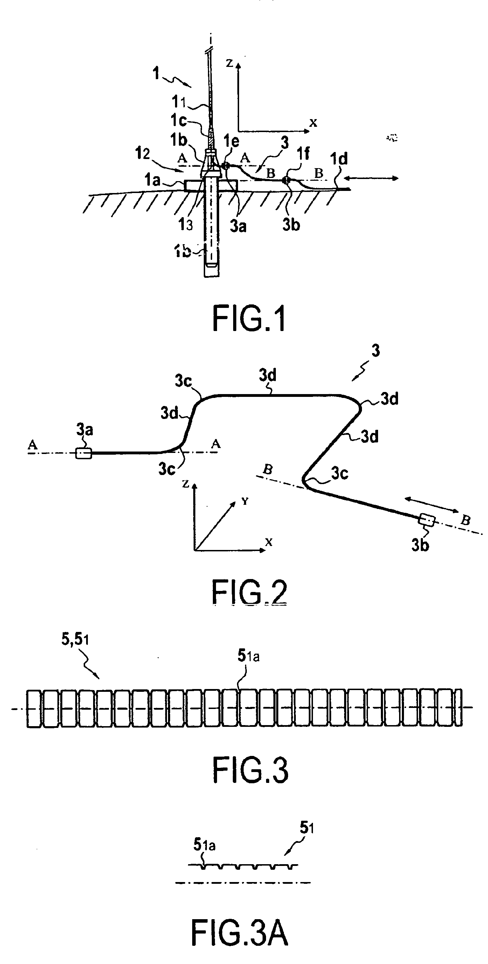

Sur la figure 1 on a représenté en coupe et en vue de côté, une embase d'ancrage 1₂ d'une conduite de liaison fond-surface 1 comportant une plateforme 1a reposant au fond de la mer 2, ladite plateforme étant ancrée par un pieu 1b et ladite plateforme supportant une structure 1b. La structure 1b supporte un dispositif d'encastrement 1c de l'extrémité inférieure 1₁ de la conduite 1 d'une part et d'autre part la structure 1b supporte et maintient en position une portion de conduite coudée 1₃ reliée à l'extrémité inférieure 1₁ de la conduite de liaison fond-surface 1. Des installations de ce type ont été décrits dans les demandes de brevets antérieures au nom de la demanderesse, notamment WO 02/066786 et WO 2003/095788.

La conduite de liaison fond-surface comporte de façon connue une colonne montante sensiblement verticale appelée « riser vertical » s'étendant depuis ladite embase 1₂ jusqu'en subsurface et relié à un support flottant en surface par une conduite flexible plongeante en forme de chaînette. L'extrémité supérieure du riser vertical en subsurface au niveau de la jonction avec ladite conduite flexible étant maintenue en tension par un flotteur non représenté. L'extrémité libre de la portion de conduite coudée 1₃ maintenue par l'embase 1₂ comporte une partie mâle ou femelle de connecteur automatique 1e. Une conduite de jonction 3 comportant une pluralité de courbures assure la jonction entre l'élément de connecteur 1e de l'extrémité de la portion de conduite coudée 1₃ et celui 1f d'une conduite reposant au fond de la mer 1d.

Ladite conduite de jonction 3 est représentée en perspective sur la figure 2 et comporte quatre courbures ou coudes 3c permettant des changements de direction multiples et importants en raison des conditions d'installation et des conditions opérationnelles de la conduite 1d reposant sur le fond de la mer. En effet, lors de l'installation de l'ensemble, on cherche à poser l'extrémité de la conduite sous-marine 1d reposant au fond de la mer à proximité de l'embase 1₂, par exemple dans une cible de 15m de rayon située à 40m de l'embase 1₂. Et, de ce fait, la forme définitive de ladite conduite de jonction 3 n'est connue qu'après installation de l'embase 1₂ d'une part, et d'autre part, de la conduite sous-marine 1d reposant au fond de la mer. La conduite de jonction 3 est alors fabriquée après qu'une métrologie très précise ait été effectuée, de manière connue, entre l'extrémité de la partie mâle ou femelle 1e d'un connecteur automatique solidaire de l'extrémité de la portion de conduite coudée 1₃, et l'extrémité de la partie mâle ou femelle 1f d'un connecteur automatique solidaire de l'extrémité de la conduite reposant sur le fond de la mer 1d. L'axe BB du connecteur automatique 1f, correspondant à la partie femelle ou mâle 3b du connecteur automatique d'une extrémité de la conduite de jonction 3, a en général une direction radicalement différente de l'axe AA de la partie mâle ou femelle du connecteur automatique 1e, de la portion de conduite coudée 1₃ correspondant à la partie femelle ou mâle 3c du connecteur automatique de l'extrémité de la conduite de jonction 3, comme représenté sur la figure 2. La conduite de jonction 3 est alors réalisée en surface en intégrant des parties droites 3d, des changements de direction importants, en général trois ou quatre, voire plus, créés par des tronçons coudés 3c, en général d'angle à 90°, de manière à donner de la flexibilité à la conduite de jonction 3. En effet, lorsque la conduite 1d reposant sur le fond de la mer se trouve en pression, son extrémité s'allonge légèrement et cette élongation augmente lorsque la température du pétrole augmente. Ainsi, son extrémité se rapproche de l'embase 1₂. De même, en cas de dépressurisation et de refroidissement de ladite conduite, cette dernière se rétracte et son extrémité s'éloigne de l'embase 1₂. Ainsi, les changements de direction multiples et importants de la conduite de jonction 3 sont destinés à donner de la flexibilité à l'ensemble et à autoriser des déplacements axiaux selon AA et BB, tout en limitant les niveaux de contrainte de flexion acceptables dans l'ensemble de ladite conduite de jonction 3.

Lorsque l'on cherche à garder le pétrole brut à une température élevée tout le long du parcours depuis la tête de puits jusqu'en surface, on utilise avantageusement des conduites isolées, en général de conduites de type PiP. En revanche, les conduites de jonction 3 ne sont pas du type PiP, mais sont en général isolées par des coquilles de mousse syntactique ou des revêtements de matériaux isolants thermoplastiques, fabriqués sur mesure et assemblés les uns à côté des autres sur toute la longueur. Ces systèmes d'isolation sont très délicats et coûteux à fabriquer et à installer, et de plus sont sujets à fissuration dans le temps lorsqu'ils sont installés au fond de la mer, en raison des gradients de température importants auxquels ils sont soumis. En effet, leur paroi externe est à la température de l'eau de mer, c'est-à-dire à 3-5°C, alors qu'au contact avec la conduite de jonction la température du pétrole peut atteindre 60 à 90°C, voire plus.

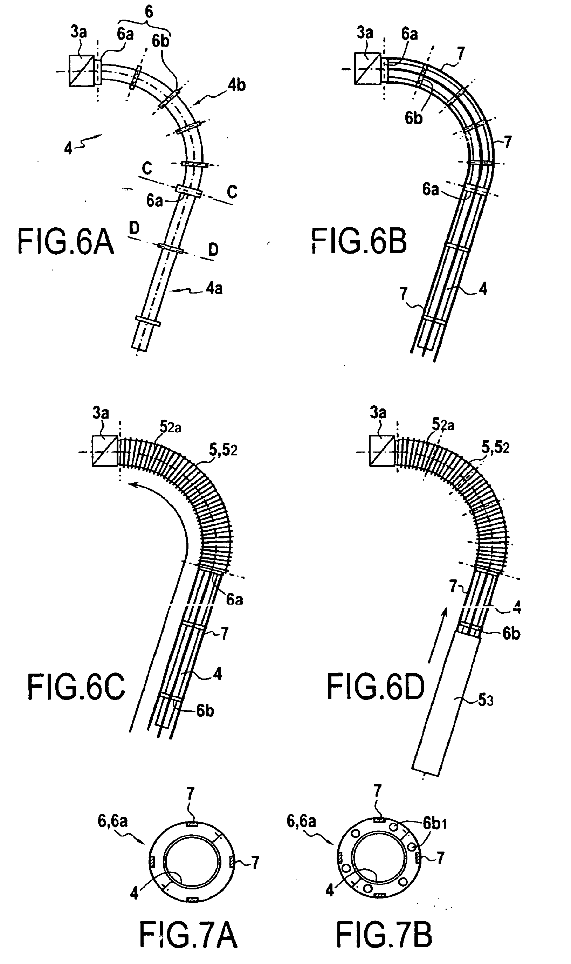

La conduite de jonction 3 isolée selon l'invention est représentée sur les figures 6A-6B-6C-6D à divers stades de sa fabrication. Elle est constituée :
- d'une partie de conduite interne en acier 4 constituée de tronçons rectilignes 4a et de tronçons coudés 4b, l'extrémité de ladite conduite de jonction étant équipée de la partie femelle 3a d'un connecteur automatique,
- d'une enveloppe externe 5 étanche en matière plastique à section circulaire, présentant une souplesse telle qu'elle puisse être cintrée et s'adapter au rayon de courbure du tronçon coudé 4b autour duquel elle est installée,
- des éléments centraliseurs 6,6a,6b en forme de colliers en matériau rigide isolant de préférence matériau plastique ou composite, de section transversale circulaire sur la périphérie desquelles ladite enveloppe externe repose, assurant le maintien de la concentricité entre la conduite interne 4 et l'enveloppe externe 5, avec :
   - des éléments centraliseurs étanches 6a empêchant le passage du fluide d'isolation à travers dudit centraliseur étanche et,
   - des éléments centraliseurs non étanches 6b autorisant le passage du fluide d'isolation à travers des orifices de passage 6b₁ autorisant le passage de part et d'autre dudit élément centraliseur non étanche, et
- des éléments de guidage longitudinaux 7 parallèles à la conduite interne, au moins trois, de préférence au moins quatre éléments de guidage solidaires de la périphérie des éléments centraliseurs 6.

On entend ici par « parallèle » que lesdits éléments de guidage sont disposés à distance constante de la conduite interne.

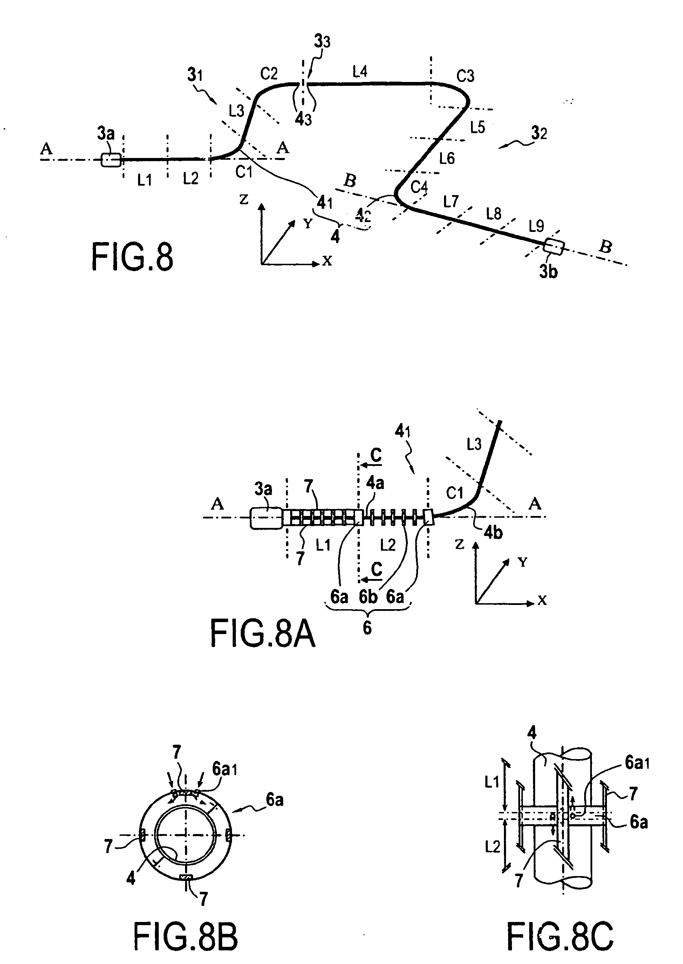

Sur les figures 7A, 7B et 8B, on voit que les colliers constituant les éléments centraliseurs sont constitués à partir de demi-colliers semi-tubulaires accolés l'un à l'autre et assemblés autour de la conduite interne 4, de manière étanche.

L'enveloppe externe 5 souple ou semi-rigide peut ainsi être enfilée depuis une extrémité libre de la conduite interne 4 ne comportant pas encore la terminaison par un connecteur automatique 3a,3b, pour être amenée jusqu'à sa position finale par glissement sur les éléments de guidage 7 au regard des parties droites 4a et coudes 4b de la conduite interne, comme représenté sur la figure 6C. Lors de l'enfilage de la paroi tubulaire de l'enveloppe externe 5 autour de la conduite interne 4, l'enveloppe externe 5 se trouve guidée grâce aux différents éléments de guidage 7 et surtout grâce au fait que l'enveloppe garde sa section transversale sensiblement circulaire lorsqu'elle est courbée comme il sera décrit ci-après. Ainsi, la progression axiale de ladite enveloppe ne se trouve pas empêchée par les divers éléments centraliseurs 6a,6b, dont le diamètre extérieur est juste légèrement inférieur au diamètre interne de ladite enveloppe externe.

La figure 6A représente en vue de dessus de l'extrémité de la conduite interne équipée d'un connecteur automatique 3a, ladite conduite interne comportant une partie courbe ou coudée 4b et une partie rectiligne 4a sur lesquelles on a préinstallé des éléments centraliseurs étanches 6a et non étanches 6b, plus rapprochés les uns des autres dans la partie courbe 4b que dans la partie rectiligne 4a. Enfin, on a placé deux éléments centraliseurs étanches 6a respectivement aux deux extrémités du tronçon coudé 4b, ces derniers étant quelque peu plus larges que les éléments centraliseurs non étanches de manière à pouvoir y fixer les extrémités des tronçons d'enveloppe externe par cerclage desdites extrémités autour et contre la surface périphérique cylindrique des dits éléments centraliseurs étanches 6a.

Sur la figure 6B, on a installé des éléments de guidage 7 « parallèlement » à la conduite interne 4, de préférence en continuité les uns des autres le long d'une direction « parallèle » à une génératrice de la conduite interne, et répartis de préférence de manière régulière sur la périphérie des éléments centraliseurs 6a,6b comme représenté sur les figures 7A-7B, où ils sont au nombre de quatre.

Sur la figure 6C, on enfile une portion d'enveloppe externe souple 5 autour du tronçon coudé 4b de conduite interne, depuis l'extrémité libre du tronçon rectiligne 4a. Le tronçon d'enveloppe externe 5 s'étendant de préférence d'un premier élément centraliseur étanche 6a jouxtant le connecteur automatique 3a, jusqu'à un second élément centraliseur étanche 6a à l'autre extrémité du tronçon coudé 4b, ledit tronçon d'enveloppe externe recouvrant ainsi quatre autres éléments centraliseurs non étanches 6b. Les extrémités du tronçon d'enveloppe externe souple sont fermement appliquées sur les éléments centraliseurs d'extrémité grâce à des moyens de cerclage, non représentés. Ainsi, le volume compris entre la conduite interne 4b et l'enveloppe externe 5 et les éléments centraliseurs étanches 6a est rendu étanche. Ledit volume peut alors avantageusement être rempli, à travers un orifice obturable 6a₁ représenté figures 8B et 8C, d'un composé isolant quasi-incompressible, transféré à l'état liquide jusqu'au remplissage complet dudit volume. Puis, l'orifice de remplissage 6a₁ est obturé de manière définitive et parfaitement étanche et ledit composé peut polymériser au bout de quelques heures pour se réticuler sous forme de gel. On utilise par exemple un gel polyuréthane-kérosène de la Société ARKEMA (France) qui est transféré à l'état liquide après mélangeage des composants et qui réticule à froid en quelques heures sous forme de gel.

Pour assurer un remplissage intégral du volume, on aura pris soin de disposer le tronçon en question selon une pente suffisante, de manière à éviter les poches d'air au niveau des centraliseurs non étanches intermédiaires, et des orifices supplémentaires situés tangentiellement à l'enveloppe externe, en partie haute desdits centraliseurs non étanches, réduiront encore les volumes desdites poches d'air qui pourraient être piégées.

Sur la figure 6D, on enfile un tronçon d'enveloppe externe circulaire rigide 5₃, constitué à partir d'une conduite extrudée en polyéthylène ou polypropylène de 4 à 15mm d'épaisseur, jusqu'à atteindre un centraliseur étanche 6a. Puis, on chauffe de manière uniforme, par exemple à l'aide d'air chaud, sur une longueur de 10 à 20cm, l'extrémité de l'enveloppe, qui une fois ramollie est cerclée de manière étanche sur ledit élément centraliseur d'extrémité 6a. La seconde extrémité dudit tronçon d'enveloppe 5₃ est ajustée en longueur pour collaborer avec un second élément centraliseur étanche 6a, non représenté, autour duquel elle est cerclée de manière étanche après avoir été chauffée pour être ramollie comme expliqué précédemment. On notera qu'il n'est possible d'installer un tronçon d'enveloppe externe rigide qu'à condition que la portion de conduite interne correspondante ne comporte pas une portion d'extrémité ou une portion rectiligne ne comportant aucune portion coudée depuis son extrémité libre à partir de laquelle est enfilé ledit tronçon d'enveloppe rigide. En l'espèce, l'extrémité du tronçon d'enveloppe externe rectiligne rigide 5₃ est fixée sur l'élément centraliseur étanche 6a sur lequel est également fixée l'extrémité du tronçon d'enveloppe externe souple coudée 5₂ de la figure 6D.

Sur la figure 3 on a représenté une première version d'enveloppe externe constituant une enveloppe externe semi-rigide 5₁ obtenue à partir d'une conduite extrudée en matière plastique notamment en polypropylène d'épaisseur de 1 à 8mm, de préférence 2 à 5mm et présentant des cannelures ou rainures à profil arrondi ou creux 5₁a régulièrement espacées tout les 5 à 10cm dans la direction longitudinale axiale de l'enveloppe externe. Lesdites cannelures sont obtenues directement lors du processus de fabrication par déformations localisées à chaud, avant le durcissement du matériau plastique extrudé une fois refroidi. Ces cannelures présentent une largeur, ainsi qu'une profondeur sensiblement de 1 à 2cm, pour un diamètre global de l'enveloppe externe de 25 à 50cm, de préférence 35 à 45cm. Des gaines de ce type sont couramment employées comme gaines de conduites électriques devant être enterrées dans le sol ou intégrées à des éléments de maçonnerie, ou encore comme drain.

Ces cannelures annulaires constituent des éléments de renfort de l'enveloppe, qui lui confèrent une rigidité de forme dans sa section transversale et ainsi permettent de maintenir la forme sensiblement circulaire de la section transversale de l'enveloppe en dépit de sa forme coudée le cas échéant.

Des gaines annelées de ce type sont commercialisées par la Société Courant (France), sous la référence « drain agricole ».

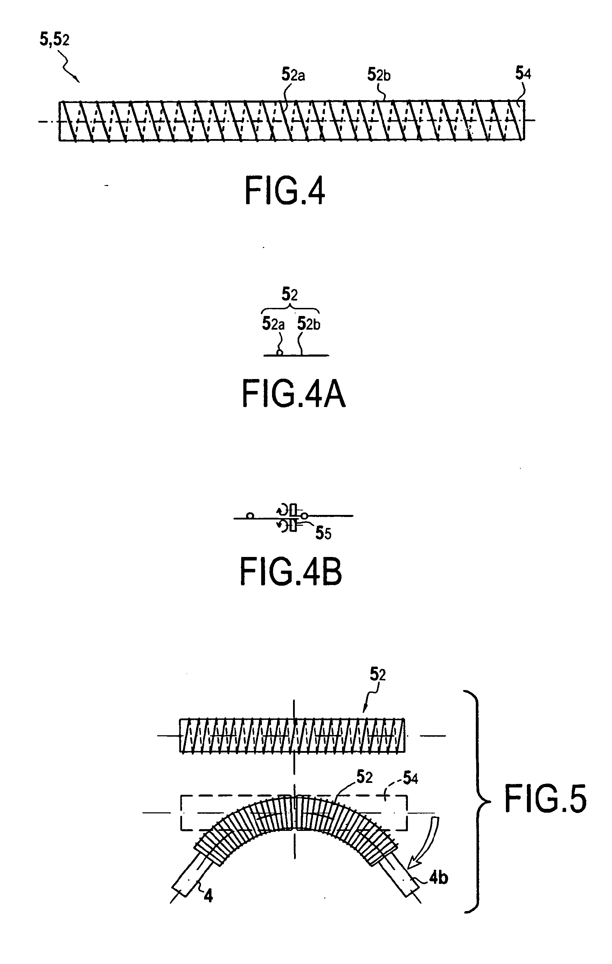

Sur la figure 4 on a représenté en vue de côté une deuxième version préférée 5₂ d'une enveloppe externe 5 selon l'invention, présentant une plus grande souplesse. Elle est constituée, comme représenté en section transversale sur les figures 4A-4B par un ruban 5₂b de matière plastique ou de toile imperméable enduite de polyuréthane comportant un élément de renfort sous forme de fil ou de jonc 5₂a en acier, en inox ou en matière plastique enrobé dans le matériau thermoplastique ou dans le matériau constitutif de ladite toile, ou encore un jonc en polyamide ou en polypropylène, thermo soudé ou collé sur ladite toile. Le fil de jonc est disposé selon la direction longitudinale de ladite bande ou ruban. L'enveloppe souple 5₂ est obtenue par enroulement en spirale autour d'un mandrin rigide 5₄ dont le diamètre externe est juste légèrement supérieur au diamètre externe des éléments centraliseurs 6a-6b, les spires étant solidarisées les unes aux autres au cours de l'enroulement, par exemple par soudage, par fusion à la molette chaude, ou par ultrasons à la molette, de leur bord 5₅ se chevauchant, comme représenté sur la figure 4B. Le fil ou jonc 5₂a après enroulement en spirale forme un élément structurel de renfort de forme hélicoïdale, lequel à la manière d'un ressort et au même titre que les cannelures 5₁a du premier mode de réalisation de la figure 3 permet de maintenir en forme sensiblement circulaire la section transversale sensiblement circulaire de l'enveloppe externe lorsqu'elle est cintrée, comme représenté sur la figure 5. Ce type d'enveloppe par enroulement en spirale de bande ou ruban comportant un élément de renfort longitudinal est couramment employé dans la fabrication des gaines de ventilation de gros diamètre, ces gaines sont commercialisées par exemple par la société Masterflex (France), sous la référence Master-PUR-LAE. En outre, ce mode de réalisation est particulièrement préféré, car en procédant ainsi, on obtient à partir d'un rouleau de bande renforcée, une enveloppe externe au diamètre désiré, par simple changement du diamètre du mandrin sur lequel on fabrique en continu ladite enveloppe externe. Ce mode de réalisation est avantageux aussi, car il est alors possible de transporter dans un volume très réduit un stock important de bandes de ce type, et de fabriquer sur site à la demande, en diamètre et longueur, les éléments d'enveloppe nécessaire à la réalisation des différents tronçons de ladite conduite de jonction. Les enveloppes externes finies, aussi bien selon les modes de réalisation des figures 3 que 4, occupent un volume très important, même s'ils sont comprimés fortement et mis en accordéon.

Sur la figure 5 on a représenté un tronçon d'enveloppe externe souple 5₂ selon la figure 4, en position rectiligne dans la partie haute de la figure, et en position cintrée autour d'une portion de conduite interne coudée 4b en partie basse de la figure.

Les conduites de jonction 3 ont des formes et des longueurs très variées. Les plus courtes font 10 à 15m de long et les plus longues peuvent atteindre et dépasser 100m. Ainsi, pour réaliser l'intégralité d'une conduite de jonction, on procèdera avantageusement en plusieurs tronçons comme expliqué sur la figure 8. A titre d'exemple, la conduite de jonction présente une distance de 75m entre les extrémités des connecteurs automatiques 3a et 3b et a une longueur développée de 127m. Elle est préparée en deux tronçons 3₁-3₂ qui seront en phase finale raccordés par soudure des extrémités 4₃ de deux tronçons de conduite interne en acier 4₁-4₂ en 3₃. La fabrication du tronçon de la conduite interne 4₁ du tronçon de conduite de jonction 3₁ inclut la mise en place du connecteur automatique 3a à son extrémité, puis l'installation des éléments centraliseurs 6a-6b des éléments de guidage 7, puis l'enfilage depuis l'extrémité 4₃-3₃ d'une première longueur L1 de tronçon d'enveloppe externe semi-rigide 5₁ de type de la figure 3, puis d'une deuxième longueur L2 de tronçon d'enveloppe externe semi-rigide 5₁, puis d'une troisième longueur coudée C₁ d'enveloppe souple de type 5₂, puis d'un quatrième tronçon rectiligne de longueur L3 d'enveloppe externe de type semi-rigide 5₁ et enfin un dernier tronçon coudé de longueur C₂ d'une enveloppe externe souple 5₂. De la même manière, une deuxième partie de conduite de jonction 3₂ est préfabriquée à partir d'une partie de conduite interne 4₂ comportant une pluralité de parties courbes 4b et de parties droites 4a et un connecteur automatique 3b à une de ses extrémités. De la même manière, on applique sur ladite partie de conduite interne 4₂ des éléments centraliseurs 6a-6b et les éléments de guidage 7. Et, de la même manière des tronçons d'enveloppes externes semi-rigides 5₁ et souples 5₂ sont enfilés sur des tronçons de conduite interne rectiligne de longueur L4 à L9 pour les tronçons d'enveloppe externe semi-rigide 51 et autour de tronçons coudés de longueur C3 à C4 pour les enveloppes externes souples 5₂. Toutefois, le dernier tronçon rectiligne de longueur L4 peut être recouvert d'une enveloppe externe rigide 6, car elle ne franchit pas de courbe lors de son installation depuis l'extrémité libre 4₃ de la partie de conduite interne 4₂. Chacun des tronçons d'enveloppe externe est cerclé de manière étanche sur des éléments centraliseurs étanches délimitant les extrémités des différents tronçons rectilignes de longueur L1 à L9 et coudés de longueur C1 à C4, sauf l'extrémité droite du dernier tronçon coudé C2 de la partie de conduite de jonction 3₁. L'extrémité gauche du tronçon L4 d'enveloppe externe rigide 6 peut être cerclée de manière étanche sur un élément centraliseur situé à 30-40 cm de l'extrémité 4₃ de la partie de conduite interne 4₂, de manière à ce que les deux parties de conduite interne 4₁-4₂ puissent être soudées entre elles à leurs extrémités 4₃ pour former un assemblage soudé 3₃ et constituer ainsi une conduite de jonction 3 par assemblage des deux parties de conduite de jonction 3₁ et 3₂. La portion d'enveloppe externe incurvée C2 est avantageusement comprimée en accordéon avant soudage des extrémités 4₃ pour dégager la zone de soudage et permettre l'accès des machines de soudage automatisées. Après le test final en pression pour tester la soudure des extrémités 4₃ des parties de conduite interne 4₁-4₂, les éléments de guidage 7 dans la zone de soudage sont mis en place et l'enveloppe souple C2 est déployée jusqu'à atteindre l'élément centraliseur commun 6a avec le tronçon d'enveloppe externe rigide 6 de longueur L4, sur lequel elle est alors cerclée de manière étanche. Enfin, les divers tronçons L1 à L9 et C1 à C4 sont successivement remplis de matériau isolant à l'état fluide, pour constituer un gel isolant après réticulation.

Les éléments centraliseurs étanches 6a sont représentés plus larges que les éléments centraliseurs non étanches 6b, car ils reçoivent les extrémités de deux tronçons adjacents d'enveloppe externe, chacune d'entre elles étant cerclée de manière étanche sur la moitié de la largeur dudit élément centraliseur. Les éléments centraliseurs constituent ainsi des points durs sur lesquels on installera avantageusement en outre une pluralité d'élingues de levage nécessaires à la manutention de l'ensemble lors de son transport sur site et de son installation au fond de la mer entre la conduite sous-marine 1d et l'embase 1₂.

Sur la figure 8A on a représenté, les tronçons rectilignes de longueur L1-L2 de conduite interne rectiligne 4a équipés à leurs extrémités d'éléments centraliseurs étanches 6a et de cinq éléments centraliseurs non étanches intermédiaires 6b, au niveau des zones L1 et L2 ainsi que des éléments de guidage 7 latéraux uniquement pour la zone L1.

La figure 8B est une coupe en vue de face selon le plan CC de la figure 8A d'un élément centraliseur étanche 6a, comportant deux orifices obturables 6a₁ permettant l'injection de produit isolant à l'état liquide, situés en partie haute de l'élément centraliseur, l'orifice de droite dirigeant le produit injecté dans la zone L1, tandis que l'orifice de gauche dirige le produit injecté dans la zone L2.

La figure 8C est une vue de dessus relative à la figure 8B détaillant le parcours du produit injecté, respectivement vers les zones L1 et L2 à partir des deux orifices 6a₁ et illustrant la limite d'insertion des enveloppes externes des tronçons L1 et L2, de manière à recouvrir l'élément centraliseur étanche commun 6a sur lequel ils sont cerclés sans recouvrir lesdits orifices d'insertion de matériau isolant 6a₁, de manière à libérer l'accès depuis l'extérieur, aux dits orifices 6a₁ et pour réaliser les injections de produit isolant.

A titre d'exemple, la conduite de jonction de la figure 8 présentant une longueur développée de 127m est constituée d'une conduite interne en acier de 200mm de diamètre externe et de 19mm d'épaisseur, d'une enveloppe externe souple ou semi-rigide de 480mm de diamètre interne, ce qui représente une épaisseur de 140mm de gel. Les différents coudes de la conduite de jonction de la figure 8 présentent des rayons de courbure d'une longueur égale à 5 fois celle du diamètre externe de la conduite interne. L'ensemble pèse 28.6 tonnes, dont 10.7 tonnes pour l'acier de la conduite interne, 1 tonne pour les deux connecteurs automatiques, 19 m3 de gel de type kérosène-polyuréthanne, de densité 0.85, soit 16.1 tonnes, et environ 0.75 tonne de centraliseurs et d'enveloppe externe.

Les 140 mm de gel de gazole-polyuréthane de la Société ARKEMA confèrent à la conduite une performance thermique (U-value) de 2.0W/m² x K, et est équivalent à système d'isolation thermique de type mousse syntactique polyuréthane (GSPU), selon l'art antérieur, de 180 mm d'épaisseur.

Ainsi, le système d'isolation selon l'invention est radicalement plus performant que celui de l'art antérieur avec de la mousse syntactique, moins coûteux, continu sur sa périphérie et sa longueur, et de surcroît non sujet à fissuration dans le temps, comme c'est le cas de la mousse syntactique.

Les conduites ont été décrites ci-dessus sur la base d'assemblages entre portions de conduites rectilignes et portions de conduites de jonction courbes planes, c'est-à-dire dont l'axe des deux portions conduites assemblées est toujours contenu dans un même plan. Mais, on reste dans l'esprit de l'invention, si lesdites portions de conduites assemblées sont disposées en queue de cochon, c'est-à-dire avec un axe sensiblement en configuration hélicoïdale sur toute ou partie de sa longueur.

## Revendications

1. Conduite de jonction sous-marine isolée thermiquement assurant la jonction entre deux portions de conduites sous-marines isolées thermiquement, ladite conduite de jonction (3) comportant une conduite interne (4) coudée rigide, de préférence en acier, et présentant un rayon de courbure de 3 à 10 fois son diamètre externe, de préférence 4 à 5 fois son diamètre externe, revêtue d'un matériau isolant thermique, comprenant :
- une enveloppe externe (5,5₁-5₂) entourant ladite conduite interne, en matériau souple ou semi-rigide suivant la forme coudée de ladite conduite interne de manière concentrique,
- la paroi tubulaire de ladite enveloppe externe comportant des éléments structurels de renfort de forme annulaire ou hélicoïdale (5₁a-5₂a) aptes à permettre la courbure de ladite paroi tubulaire de l'enveloppe externe tout en maintenant sa section transversale sensiblement uniforme, de préférence sensiblement circulaire, et concentrique à la section transversale de ladite conduite interne, en dépit de sa courbure pour suivre le contour coudé de ladite conduite interne selon son dit rayon de courbure,
**caractérisée en ce qu'**elle comprend :
- une pluralité d'éléments de support dénommés éléments centraliseurs (6,6a,6b) en matériaux rigide plastique ou composite intercalés entre ladite conduite interne (4) et ladite enveloppe externe (5) de façon à maintenir les sections transversales desdites enveloppe externe (5) et conduite interne (4) sensiblement concentriques, lesdits éléments centraliseurs étant espacés dans la direction axiale de ladite conduite tous les au moins 1m, de préférence tous les 3 à 10m, et
- une pluralité d'éléments de guidage (7) longitudinaux constitués en matériau rigide ou semi-rigide disposés à distance sensiblement constante de la surface de la conduite interne coudée (4), s'étendant entre deux éléments centraliseurs (6,6a,6b) successifs sur la périphérie desquels les extrémités desdits éléments de guidage longitudinaux (7) reposent, de préférence au moins quatre dits éléments de guidage régulièrement répartis sur la périphérie desdits éléments centraliseurs (6), et
- un matériau isolant thermique quasi-incompressible sous forme de gel remplissant entièrement l'espace annulaire entre ladite conduite interne (4) et ladite enveloppe externe (5).

2. Conduite de jonction (3) selon la revendication 1, **caractérisée en ce que** ladite enveloppe externe présente une paroi tubulaire pleine (5₁) extrudée et lesdits éléments structurels de renfort sont des éléments de forme annulaire constitués par des rainures, ondulations ou cannelures en creux (5₁a) régulièrement espacés dans la direction axiale longitudinale de ladite paroi tubulaire à section transversale circulaire.

3. Conduite de jonction (3) selon la revendication 1, **caractérisée en ce que** ladite paroi tubulaire est constituée par un enroulement spiralé d'une bande ou ruban (5₂) en matière plastique ou textile souple enduit d'un polymère comprenant un dit élément structurel de renfort de forme hélicoïdale (5₂a) constitué par un fil ou jonc en fer ou matériau plastique semi-rigide, de préférence de un fil ou jonc de diamètre de 1 à 8mm, collé ou thermo-soudé sur la surface externe du ruban ou de préférence enrobé dans la masse du matériau constitutif dudit ruban et formant ainsi une protubérance à la surface externe dudit ruban.

4. Conduite de jonction (3) selon l'une des revendications 1 à 3, **caractérisée en ce qu'**elle comprend des éléments centraliseurs étanches (6a) comprenant de préférence des orifices obturables (6a₁) permettant le remplissage en fluide de matériau isolant de l'espace entre deux éléments centraliseurs étanches successifs (6a), avec au moins un élément centraliseur étanche à chaque extrémité, de préférence au moins un élément centraliseur étanche tous les au moins 1m, de préférence encore tous les 3 à 10m et des éléments centraliseurs non étanches (6b) comportant des évidements (6b₁) autorisant la circulation de fluide de matériau isolant à travers lesdits évidements desdits éléments centraliseurs non-étanches lors du remplissage entre deux éléments centraliseurs étanches consécutifs.

5. Conduite de jonction (3) selon la revendication 4, **caractérisée en ce que** lesdits éléments centraliseurs (6,6a,6b) sont constitués par des colliers en matériau rigide disposés autour et contre ladite conduite interne (4) et sur lesquels repose ladite enveloppe externe (5).

6. Conduite de jonction selon l'une des revendications 1 à 5 **caractérisée en ce que** ledit gel isolant comprend un premier composé présentant des propriétés d'isolation thermique, tels que des alcanes, comprenant une chaîne hydrocarbonée d'au moins six atomes de carbone, de préférence au moins dix atomes de carbone, en mélange avec un second composé consistant en un composé polymère gélifiant ou à effet structurant, notamment par réticulation tel, qu'un composé de type polyuréthane, polypropylène, polyéthylène ou silicone, ledit premier composé se présentant de préférence sous forme de particules ou microcapsules dispersées au sein d'une matrice dudit second composé gélifié ou réticulé, ladite matrice confinant ainsi ledit premier composé isolant.

7. Conduite de jonction selon la revendication 6 **caractérisée en ce que** ledit gel isolant est un mélange de kérosène et polyuréthane.

8. Conduite de jonction (3) selon l'une des revendications 1 à 7, **caractérisée en ce qu'**elle comprend un élément de raccordement, de préférence une partie mâle ou femelle d'un connecteur automatique (3a,3b) à chaque extrémité.

9. Conduite de jonction (3) selon l'une des revendications 1 à 8, **caractérisée en ce qu'**elle comporte au moins deux tronçons coudés (3c), espacés par au moins un tronçon rectiligne (3d) de conduite, de préférence au moins 3 tronçons coudés (3c) et au moins 2 tronçons rectilignes (3d) entre lesdits tronçons coudés.

10. Procédé de fabrication d'une conduite de jonction isolée thermiquement selon l'une des revendications 1 à 9, **caractérisé en ce qu'**on réalise les étapes suivantes dans lesquelles :
1) on applique de préférence des éléments centraliseurs (6,6a,6b), de préférence régulièrement espacés, à la surface d'une dite conduite interne coudée (4) avec au moins deux dits éléments centraliseurs étanches (6a) respectivement à chaque extrémité et de préférence des éléments centraliseurs non étanches (6b) entre les éléments centraliseurs étanches d'extrémité (6a), et
2) on applique de préférence desdits éléments de guidage longitudinaux (7) s'étendant par-dessus et entre lesdits éléments centraliseurs (6,6a,6b) successifs sur lesquels ils reposent et sont le cas échéant fixés,
3) on enfile une dite enveloppe externe (5) souple (5₂) ou semi-rigide (5₁) autour de ladite conduite interne, les extrémités de ladite enveloppe externe étant de préférence cerclées autour et contre lesdits éléments centraliseurs d'extrémité au moins,
4) on remplit entièrement l'espace libre entre lesdites conduite interne (4) et enveloppe externe (5) avec un dit matériau isolant thermiquement, versé à l'état liquide, de préférence par des orifices obturables (6a) au niveau de dits éléments centraliseurs étanches (6a).

11. Procédé selon la revendication 10, dans lequel on fabrique une dite conduite de jonction comportant une pluralité de tronçons coudés (3c) et une pluralité de tronçons rectilignes (3d), **caractérisé en ce qu'**on réalise des étapes dans lesquelles :
1) on réalise deux parties (4₁,4₂) de dite conduite interne (4) comprenant chacune au moins un tronçon coudé (4b), de préférence au moins 2 tronçons coudés (C₁-C₂,C₃-C₄), et au moins un tronçon rectiligne (4a) de préférence au moins deux tronçons rectilignes (L₁-L₃,L₅-L₉),
2) on applique desdits éléments centraliseurs (6a-6b) sur lesdites parties de conduite interne et desdits éléments de guidage (7) sur lesdits éléments centraliseurs (6), avec de préférence des éléments centraliseurs étanches (6a) délimitant les extrémités de chacun des tronçons coudés (C₁-C₂,C₃-C₄) et rectilignes (L₁-L₃, L₄-L₉),
3) on enfile des tronçons de dite enveloppe externe (5) souple ou semi-rigide (5₁,5₂) autour desdits tronçons coudés (6₁,6₄) ou rectilignes (L₁,L₉) desdites parties de conduite interne par-dessus desdits éléments centraliseurs (6) et lesdits éléments de guidage (7), et
4) on solidarise lesdits tronçons d'enveloppe externe, de préférence au niveau desdits éléments centraliseurs étanches (6a) aux extrémités de chacun desdits tronçons rectilignes et coudés de conduite interne (C1-C4,L1-L9), excepté de préférence à une extrémité du tronçon à l'extrémité (3₃) d'au moins une des dites parties de conduite de jonction (3₁-3₂) ainsi constituées, pour permettre le repliement de ladite extrémité d'enveloppe externe au niveau de la zone de soudage de l'étape 5),
5) on réalise un assemblage par soudage bout à bout des deux extrémités (4₃) des deux dites parties de conduite interne (4),
6) on réalise la jonction des extrémités des deux tronçons terminaux de dites enveloppes externes (5) souples ou semi-rigides en vis-à-vis de la zone de soudage de l'étape 5), et
7) on réalise le remplissage en matériau isolant thermique des espaces libres entre lesdits tronçons d'enveloppe externe et lesdits tronçons de conduite interne, versé sous forme liquide, de préférence au niveau d'orifices obturables (6a₁) dans desdits éléments centraliseurs étanches aux extrémités desdits tronçons (L₁-L₉,C₁-C₄).

## Claims

1. A thermally insulating undersea junction pipe providing a junction between two thermally insulating undersea pipe portions, said junction pipe (3) comprising a rigid bent inner pipe (4), preferably made of steel, and presenting a radius of curvature that is three to ten times its outside diameter, preferably four to five times its outside diameter, and coated in a thermally insulating material, comprising:
• an outer jacket (5, 5₁-5₂) surrounding said inner pipe, the jacket being made of flexible or semirigid material matching the bent shape of said inner pipe in coaxial manner; and
• the tubular wall of said outer jacket including structural reinforcing elements of annular or helical shape (5₁a-5₂a) suitable for enabling said tubular wall of the outer jacket to be bent while keeping its cross-section substantially uniform, preferably substantially circular, and coaxial with the cross-section of said inner pipe, in spite of being bent to match the bent outline of said inner pipe with its said radius of curvature;
the junction pipe being **characterized in that** it includes:
• a plurality of support elements, referred to as centralizer elements (6, 6a, 6b), made of rigid plastics or composite material interposed between said inner pipe (4) and said outer jacket (5) so as to keep the cross-sections of said outer jacket (5) and said inner pipe (4) substantially coaxial, said centralizer elements being spaced apart in the axial direction of said pipe at intervals of at least 1 m, preferably of at least 3 m to 10 m;
• a plurality of longitudinal guide elements (7) made of rigid or semirigid material placed at a substantially constant distance from the surface of the bent inner pipe (4), extending between two successive centralizer elements (6, 6b, 6b) having the ends of said longitudinal guide elements (7) resting on the peripheries thereof, preferably at least four of said guide elements being regularly distributed around the peripheries of said centralizer elements (6); and
· a quasi incompressible thermally insulating material in the form of a gel completely filling the annular space between said inner pipe (4) and said outer jacket (5).

2. A junction pipe (3) according to claim 1, **characterized in that** said outer jacket presents an extruded solid tubular wall (5₁) and said structural reinforcing elements are elements of annular shape constituted by recessed grooves, corrugations, or fluting (5₁a) regularly spaced apart in the longitudinal axial direction of said tubular wall of circular cross-section.

3. A junction pipe (3) according to claim 1, **characterized in that** said tubular wall is constituted by a spiral winding of a strip or ribbon (5₂) of plastics material or of flexible fabric coated in a polymer including a said structural reinforcing element of helical shape (5₂a) constituted by a wire or string of iron or semirigid plastics material, preferably a wire or string having a diameter of 1 mm to 8 mm that is adhesively bonded or heat-sealed onto the outside surface of the ribbon or that is preferably embedded in the mass of the material constituting said ribbon, thereby forming a projection at the outside surface of said ribbon.

4. A junction pipe (3) according to any one of claims 1 to 3, **characterized in that** it includes leaktight centralizer elements (6a) preferably having closable orifices (6a₁) enabling the space between two successive leaktight centralizer elements (6a) to be filled with fluid insulating material, there being at least one leaktight centralizer element at each end, preferably at least one leaktight centralizer element every at least 1 m, preferably every 3 m to 10 m, and non-leaktight centralizer elements (6b) including openings (6b₁) allowing insulating material fluid to flow through said openings in said non-leaktight centralizer elements while filling between two consecutive leaktight centralizer elements.

5. A junction pipe (3) according to claim 4, **characterized in that** said centralizer elements (6, 6a, 6b) are constituted by collars of rigid material placed around and against said inner pipe (4) and having said outer jacket (5) resting thereagainst.

6. A junction pipe (3) according to any one of claims 1 to 5, **characterized in that** said insulating gel comprises a first compound presenting thermal insulation properties, such as alkanes, having a hydrocarbon chain with at least six carbon atoms, preferably at least ten carbon atoms, mixed with a second compound consisting in a gelling or structuring-effect polymer compound operating in particular by curing, such as a compound of the polyurethane, polypropylene, polyethylene, or silicone type, said first compound preferably being in the form of particles or microcapsules dispersed within a matrix of said gelled or cured second compound, said matrix thereby confining said insulating first compound.

7. A junction pipe (3) according to claim 6, **characterized in that** said insulating gel is a mixture of kerosene and of polyurethane.

8. A junction pipe (3) according to any one of claims 1 to 7, **characterized in that** it includes a coupling element at each end, preferably a male or female portion of an automatic connector (3a, 3b).

9. A junction pipe (3) according to any one of claims 1 to 8, **characterized in that** it includes at least two bent pipe segments (3c) spaced apart by at least one straight pipe segment (3d), preferably at least three bent segments (3c) and at least two straight segments (3d) between said bent segments.

10. A method of fabricating a thermally insulated junction pipe according to any one of claims 1 to 9, the method being **characterized in that** it comprises the following steps:
1) preferably applying centralizer elements (6, 6a, 6b), preferably regularly spaced apart, to the surface of a said bent inner pipe (4) using at least two leaktight centralizer elements (6a) located respectively at each end and preferably non-leaktight centralizer elements (6b) between the end leaktight centralizer elements (6a);
2) preferably applying said longitudinal guide elements (7) extending over and between said successive centralizer elements (6, 6a, 6b) on which they rest and, where appropriate, are fastened;
3) threading a said flexible or semirigid outer jacket (5₂, 5₁, 5) around said inner pipe, the ends of said outer jacket preferably being bound around and against at least said end centralizer elements; and
4) completely filling the empty space between said inner pipe (4) and said outer jacket (5) with a said thermally insulating material poured in in the liquid state, preferably via closable orifices (6a) in said leaktight centralizer elements (6a).

11. A method according to claim 10, wherein a said junction pipe is fabricated comprising a plurality of bend segments (3c) and a plurality of straight segments (3d), the method being **characterized in that** it comprises the following steps:
1) making two portions (4₁, 4₂) of said inner pipe (4), each portion including at least one bend segment (4b), preferably at least two bend segments (C₁-C₂, C₃-C₄), and at least one straight segment (4a), preferably at least two straight segments (L₁-L₃, L₅-L₉);
2) applying said centralizer elements (6a-6b) to said inner pipe portions and said guide elements (7) to said centralizer elements (6), preferably with leaktight centralizer elements (6a) defining the ends of each of the bend and straight segments (C₁-C₂, C₃-C₄; L₁-L₃, L₄-L₉) ;
3) threading segments of said flexible or semirigid outer jacket (5₁, 5₂, 5) around said bend or straight segments (6₁, 6₄; L₁, L₉) of said inner pipe portions over said centralizer elements (6) and said guide elements (7);
4) securing said outer jacket segments, preferably via said leaktight centralizer elements (6a) at the ends of each of said straight and bend segments of the inner (C₁-C₄, L₁-L₉), preferably with the exception of a first end segment (3₃) of at least one of said junction pipe portions (3₁-3₂) as made in this way, so as to enable said outer jacket end to be folded back from the weld zone of step 5);
5) assembling together two ends (4₃) of said two inner pipe portions (4) together end to end by welding;
6) joining together the ends of two terminal segments of said flexible or semirigid outer jackets (5) in register with the weld zone of step 5); and
7) filling said empty spaces between said outer jacket segments and said inner pipe segments with thermally insulating materials poured in liquid form, preferably via closable orifices (6a₁) in said leaktight centralizer elements at the end of said segments (L₁-L₉, C₁-C₄).

## Patentansprüche

1. Wärmeisolierte Unterwasserverbindungsleitung, die die Verbindung zwischen zwei wärmeisolierten Unterwasserleitungsabschnitten sicherstellt, wobei die Verbindungsleitung (3) eine gekrümmte starre Innenleitung (4), vorzugsweise aus Stahl, mit einem Krümmungsradius, der das 3- bis 10-fache ihres Außendurchmessers, vorzugsweise das 4- bis 5-fache ihres Außendurchmessers beträgt, umfaßt, die mit einem Wärmedämmstoff überzogen ist, umfassend:
- einen Außenmantel (5, 5₁-5₂) aus flexiblem oder halb starrem Material, der die Innenleitung entsprechend der gekrümmten Form der Innenleitung konzentrisch umgibt,
- wobei die rohrförmige Wand des Außenmantels ring- oder spiralförmige Verstärkungsstrukturelemente (5₁a-5₂a) umfaßt, die geeignet sind, das Krümmen der rohrförmigen Wand des Außenmantels zu ermöglichen und dabei - trotz ihrer Krümmung, um der gekrümmten Kontur der Innenleitung entlang ihrem Krümmungsradius zu folgen - ihren Querschnitt im wesentlichen gleichförmig, vorzugsweise im wesentlichen kreisförmig und zum Querschnitt der Innenleitung konzentrisch zu halten,
**dadurch gekennzeichnet, daß** sie umfaßt:
- eine Vielzahl von als Zentrierelemente (6, 6a, 6b) bezeichneten Tragelementen aus starrem Kunststoff oder Verbundwerkstoff, die zwischen der Innenleitung (4) und dem Außenmantel (5) eingefügt sind, um die Querschnitte des Außenmantels (5) und der Innenleitung (4) im wesentlichen konzentrisch zu halten, wobei die Zentrierelemente in axialer Richtung der Leitung in einem Abstand von wenigstens 1 m, vorzugsweise alle 3 bis 10 m angeordnet sind, und
- eine Vielzahl von länglichen Führungselementen (7) aus starrem oder halb starrem Material, die in im wesentlichen konstanten Abstand von der Oberfläche der gekrümmten Innenleitung (4) angeordnet sind, die sich zwischen zwei aufeinanderfolgenden Zentrierelementen (6, 6a, 6b) erstrecken, an deren Umfang die Enden der länglichen Führungselemente (7) aufliegen, vorzugsweise wenigstens vier über den Umfang der Zentrierelemente (6) gleichmäßig verteilte Führungselemente, und
- einen quasi nicht zusammendrückbaren Wärmedämmstoff in Form von Gel, der den ringförmigen Raum zwischen der Innenleitung (4) und dem Außenmantel (5) vollständig ausfüllt.

2. Verbindungsleitung (3) nach Anspruch 1, **dadurch gekennzeichnet, daß** der Außenmantel eine stranggepreßte, massive rohrförmige Wand (5₁) aufweist und die Verstärkungsstrukturelemente ringförmige Elemente sind, die durch Nuten, Wellen oder Hohlkehlen (5₁a), welche in axialer Längsrichtung der rohrförmigen Wand mit kreisförmigem Querschnitt gleichmäßig beabstandet sind, gebildet sind.

3. Verbindungsleitung (3) nach Anspruch 1, **dadurch gekennzeichnet, daß** die rohrförmige Wand durch eine Spiralwicklung eines Streifens oder Bandes (5₂) aus flexiblem Kunststoff oder Textilmaterial gebildet ist, der/das mit einem Polymer überzogen ist, das ein spiralförmiges Verstärkungsstrukturelement (5₂a) umfaßt, welches von einem Draht oder Stab aus Eisen oder halb starrem Kunststoff, vorzugsweise einem Draht oder Stab mit einem Durchmesser von 1 bis 8 mm gebildet ist, der auf die Außenfläche des Bandes geklebt oder warmgeschweißt ist oder vorzugsweise in die Masse des das Band bildenden Materials eingebettet ist und dadurch an der Außenfläche des Bandes einen Vorsprung bildet.

4. Verbindungsleitung (3) nach einem der Ansprüche 1 bis 3, **dadurch gekennzeichnet, daß** sie dichte Zentrierelemente (6a) mit vorzugsweise verschließbaren Öffnungen (6a₁), die ermöglichen, den Raum zwischen zwei aufeinanderfolgenden dichten Zentrierelementen (6a) mit einem Dämmstofffluid auszufüllen, wobei wenigstens ein dichtes Zentrierelement an jedem Ende, vorzugsweise wenigstens ein dichtes Zentrierelement wenigstens jeden 1 m, weiterhin vorzugsweise alle 3 bis 10 m vorhanden ist, sowie undichte Zentrierelemente (6b) umfaßt, die Ausnehmungen (6b₁) aufweisen, welche das Zirkulieren von Dämmstoffluid durch die Ausnehmungen der undichten Zentrierelemente beim Einfüllen zwischen zwei aufeinanderfolgende dichte Zentrierelemente zulassen.

5. Verbindungsleitung (3) nach Anspruch 4, **dadurch gekennzeichnet, daß** die Zentrierelemente (6, 6a, 6b) von Schellen aus starrem Material gebildet sind, die um die und an der Innenleitung (4) angeordnet sind und auf denen der Außenmantel (5) aufliegt.

6. Verbindungsleitung nach einem der Ansprüche 1 bis 5, **dadurch gekennzeichnet, daß** das isolierende Gel eine erste Verbindung mit Wärmedämmungseigenschaften, wie Alkane, die eine Kohlenwasserstoffkette mit wenigstens sechs Kohlenstoffatomen, vorzugsweise wenigstens zehn Kohlenstoffatomen umfassen, in Mischung mit einer zweiten Verbindung umfaßt, die aus einer gelbildenden Polymerverbindung oder Polymerverbindung mit strukturierender Wirkung, insbesondere durch Vernetzung, wie einer Verbindung vom Typ Polyurethan, Polypropylen, Polyethylen oder Silikon besteht, wobei die erste Verbindung vorzugsweise in Form von Partikeln oder Mikrokapseln, die innerhalb einer Matrix der gelierten oder vernetzten zweiten Verbindung verteilt sind, vorliegt, wobei die Matrix somit die isolierende erste Verbindung einschließt.

7. Verbindungsleitung nach Anspruch 6, **dadurch gekennzeichnet, daß** das Isoliergel ein Gemisch aus Petroleum und Polyurethan ist.

8. Verbindungsleitung (3) nach einem der Ansprüche 1 bis 7, **dadurch gekennzeichnet, daß** sie ein Verbindungselement, vorzugsweise ein Einsteck- oder Aufnahmeteil eines automatischen Verbinders (3a, 3b) an jedem Ende umfaßt.

9. Verbindungsleitung (3) nach einem der Ansprüche 1 bis 8, **dadurch gekennzeichnet, daß** sie wenigstens zwei gekrümmte Abschnitte (3c), die durch wenigstens einen geradlinigen Leitungsabschnitt (3d) beabstandet sind, vorzugsweise wenigstens 3 gekrümmte Abschnitte (3c) und wenigstens 2 geradlinige Abschnitte (3d) zwischen den gekrümmten Abschnitten umfaßt.

10. Verfahren zur Herstellung einer wärmeisolierten Verbindungsleitung nach einem der Ansprüche 1 bis 9, **dadurch gekennzeichnet, daß** die folgenden Schritte durchgeführt werden, bei denen:
1) vorzugsweise Zentrierelemente (6, 6a, 6b), die vorzugsweise gleichmäßig beabstandet sind, an der Oberfläche einer gekrümmten Innenleitung (4), angebracht werden, wobei wenigstens zwei dichte Zentrierelemente (6a) jeweils an jedem Ende und vorzugsweise undichte Zentrierelemente (6b) zwischen den dichten endseitigen Zentrierelementen (6a) vorhanden sind, und
2) vorzugsweise längliche Führungselemente (7) angebracht werden, die über die und zwischen den aufeinanderfolgenden Zentrierelemente(n) (6, 6a, 6b), auf (an) denen sie aufliegen und gegebenenfalls befestigt sind, verlaufen,
3) ein flexibler (5₂) oder halb starrer (5₁) Außenmantel (5) über die Innenleitung gestreift wird, wobei die Enden des Außenmantels vorzugsweise reifartig wenigstens um und an die endseitigen Zentrierelemente gelegt sind,
4) der freie Raum zwischen der Innenleitung (4) und dem Außenmantel (5) vollständig mit einem wärmedämmenden Material ausgefüllt wird, das in flüssigem Zustand, vorzugsweise über verschließbare Öffnungen (6a) im Bereich von dichten Zentrierelementen (6a) eingefüllt wird.

11. Verfahren nach Anspruch 10, bei dem eine Verbindungsleitung, welche eine Vielzahl von gekrümmten Abschnitten (3c) und eine Vielzahl von geradlinigen Abschnitten (3d) umfaßt, hergestellt wird, **dadurch gekennzeichnet, daß** Schritte durchgeführt werden, bei denen:
1) zwei Teile (4₁, 4₂) einer Innenleitung (4), die jeweils wenigstens einen gekrümmten Abschnitt (4b), vorzugsweise wenigstens 2 gekrümmte Abschnitte (C₁-C₂, C₃-C₄), sowie wenigstens einen geradlinigen Abschnitt (4a), vorzugsweise wenigstens zwei geradlinige Abschnitte (L₁-L₃, L₅-L₉) umfassen, hergestellt werden,
2) Zentrierelemente (6a-6b) an den Innenleitungsteilen und Führungselemente (7) an den Zentrierelementen (6) angebracht werden, wobei vorzugsweise dichte Zentrierelemente (6a) die Enden eines jeden der gekrümmten (C₁-C₂, C₃-C₄) und geradlinigen (L₁-L₃, L₄-L₉) Abschnitte begrenzen,
3) Abschnitte eines flexiblen oder halb starren (5₁, 5₂) Außenmantels (5) über die gekrümmten (6₁, 6₄) oder geradlinigen (L₁, L₉) Abschnitte der Innenleitungsteile, über Zentrierelemente (6) und die Führungselemente (7) hinweg gestreift werden,
4) die Außenmantelabschnitte, vorzugsweise im Bereich der dichten Zentrierelemente (6a) an den Enden eines jeden der geradlinigen und gekrümmten Innenleitungsabschnitte (C1-C4, L1-L9) fest verbunden werden, ausgenommen vorzugsweise an einem Ende des Abschnitts am Ende (3₃) von wenigstens einem der so gebildeten Verbindungsleitungsteile (3₁-3₂), um das Umschlagen des Außenmantelendes in Höhe des Schweißbereichs des Schrittes 5) zu ermöglichen,
5) ein Aneinanderschweißen der beiden Enden (4₃) der beiden Teile der Innenleitung (4) vollzogen wird,
6) das Verbinden der Enden der beiden Endabschnitte von flexiblen oder halb starren Außenmänteln (5) gegenüber dem Schweißbereich des Schrittes 5) vollzogen wird, und
7) das Ausfüllen der Freiräume zwischen den Außenmantelabschnitten und den Innenleitungsabschnitten mit Wärmedämmstoff vollzogen wird, der in flüssiger Form, vorzugsweise im Bereich von verschließbaren Öffnungen (6a₁) in dichten Zentrierelementen an den Enden der Abschnitte (L₁-L₉, C₁-C₄) eingefüllt wird.
